# EUROPÄISCHE PATENTANMELDUNG

(11) **EP 3 128 653 A1**
(43) Veröffentlichungstag der Anmeldung: **08.02.2017**
(21) Anmeldenummer: 15179518.4
(22) Anmeldetag: 03.08.2015
(51) Int. Cl.: H02K 7/09

(54) **VERTIKALE ELEKTRISCHE MASCHINE UND MOTOR-PUMPEN-ANORDNUNG**

(71) Anmelder: Siemens Aktiengesellschaft, 80333 München (DE)
(72) Erfinder: Walter, Hartmut, 10115 Berlin (DE)

(57) **Zusammenfassung**

Die Erfindung betrifft eine elektrische rotierende Maschine (1), insbesondere zum Antreiben einer großen Wasserpumpe, aufweisend eine Welle (4), welche dafür vorgesehen ist, eine vertikale Rotationsachse (12) zu umlaufen, und mindestens ein Axiallager (8). Um eine einfache Gesamtkonstruktion zu gewährleisten und auf einfach Weise sicherzustellen, dass ein Fördermedium und/oder die Umgebung nicht durch austretendes Schmierfett oder -öl verschmutzt werden, wird vorgeschlagen, das Axiallager (8) als ein aktives Magnetlager (5) auszuführen, wobei das als ein aktives Magnetlager (5) ausgebildete Axiallager (8) dafür vorgesehen ist, Kräfte, welche in die axiale Richtung wirken, aufzunehmen.

## Beschreibung

Die Erfindung betrifft eine elektrische rotierende Maschine, insbesondere zum Antreiben einer großen Wasserpumpe, aufweisend eine Welle, welche dafür vorgesehen ist, eine vertikale Rotationsachse zu umlaufen, und mindestens ein Axiallager.

Weiterhin betrifft die Erfindung eine Motor-Pumpen-Anordnung aufweisend eine Pumpe und eine derartige elektrische rotierende Maschine.

Eine derartige Motor-Pumpen-Anordnung weist beispielsweise eine Motorleistung von mehr als ein Megawatt bei niedriger Drehzahl auf und der Motor ist bevorzugt mindestens 8-polig. Die Motor-Pumpen-Anordnung wird beispielsweise als Kühlmittelpumpe in Kernkraftwerken oder als Meerwasserpumpe, beispielsweise in Meerwasserentsalzungsanlagen, eingesetzt. In derartigen vertikalen Motor-Pumpen-Anordnungen, insbesondere für große Wasserpumpen, befindet sich ein axiales Traglager, welches auch Axiallager genannt wird und die axialen Kräfte der Pumpe aufnimmt. Bei dem axialen Traglager handelt es sich in der Regel um ein fett- oder ölgeschmiertes Wälz- oder Gleitlager. Aufgrund der zum Teil extrem hohen axialen Kräfte und den korrespondierenden Drücken im Lager, bzw. Druckdifferenzen zwischen Lager und Lagerumgebung, treten oft Undichtigkeiten und Dichtigkeitsprobleme auf. Die Druckdifferenzen zwischen Lager und Lagerumgebung entstehen durch Unterdrücke, welche durch die Rotation der Welle verursacht werden. Das Fördermedium Wasser ist so konstant der Gefahr der Verunreinigung durch austretendes Lageröl und/oder -fett ausgesetzt. In seltenen Fällen wird das axiale Traglager für die Pumpe motorseitig eingebaut. Die Probleme der Dichtigkeit und Verunreinigung des Fördermediums sind aber bei einem motorseitigen Einbau des Axiallagers ähnlich. Bisher wurde das Problem durch einen hohen Aufwand in der Lagerkonstruktion gelöst. Aus dem US-Patent US 6 703 735 B1 ist ein aktives axiales Magnetlager, welches sich auf nur einer axialen Seite eines Rotors befindet, bekannt, wobei es einen effizienten Permanentmagneten zur Vormagnetisierung aufweist, was zu einer linearen und stark erweiterten Steuerung führt.

Der Erfindung liegt die Aufgabe zugrunde, eine elektrische rotierende Maschine, insbesondere zum Antreiben einer großen Wasserpumpe, anzugeben, welche eine einfache Gesamtkonstruktion aufweist und auf einfach Weise sicherstellt, dass ein Fördermedium und/oder die Umgebung nicht durch austretendes Schmierfett oder -öl verschmutzt werden.

Diese Aufgabe wird durch eine elektrische rotierende Maschine mit den im Anspruch 1 angegebenen Merkmalen gelöst. Dabei ist das Axiallager als ein aktives Magnetlager ausgebildet und das Axiallager ist dafür vorgesehen, Kräfte, welche in axiale Richtung wirken, aufzunehmen.

Weiterhin wird die Aufgabe durch eine Motor-Pumpen-Anordnung mit einer Pumpe und einer derartigen elektrischen rotierenden Maschine gelöst.

Aufgrund der Fett- und Ölfreiheit des aktiven Magnetlagers wird das Problem der Dichtigkeit und der Verschmutzung des Fördermediums komplett gelöst. Weiterhin vereinfacht sich der Service am Lager. Durch die Verwendung eines aktiven Magnetlagers können hochdynamische Kräfte aufgenommen werden. Weiterhin kann aktive Dämpfung in axialer Richtung eingebracht werden.

Durch Verwendung eines aktiven Magnetlagers als axiales Traglager, welches sowohl die axialen Kräfte der Pumpe im Betrieb, als auch das Gewicht der Pumpe und des Motors an sich aufnehmen kann, wird die Gesamtkonstruktion der axialen Motor-Pumpen-Anordnung erheblich vereinfacht.

Bei einer weiteren vorteilhaften Ausgestaltung ist das als aktives Magnetlager ausgebildete Axiallager oberhalb oder unterhalb der axialen Enden der elektrischen rotierenden Maschine angeordnet. Das aktive Magnetlager bietet den Vorteil, dass es sowohl auf der Antriebs- wie auf der Nichtantriebsseite der elektrischen rotierenden Maschine eingebaut werden kann, da das axiale Wachstum der elektrischen rotierenden Maschine durch das aktive Magnetlager kompensiert werden kann. Dies ist besonders vorteilhaft, da sich so mehr Freiheiten bei der Konstruktion ergeben und sich die elektrische rotierende Maschine kompakter realisieren lässt.

Bei einer bevorzugten Ausführungsform weist die Welle eine quer zur vertikalen Rotationsachse verlaufende Ankerscheibe auf, wobei das als aktives Magnetlager ausgebildete Axiallager mindestens einen ersten Elektromagneten aufweist, welcher mit der Ankerscheibe einen ersten Luftspalt ausbildet, sodass die Ankerscheibe durch die Magnetkraft des Elektromagneten berührungslos gelagert ist. Durch die Ankerscheibe bildet sich über den Luftspalt ein magnetischer Kreis aus. Diese Konstruktion ist sehr einfach zu realisieren.

In besonders vorteilhafter Weise weist der Elektromagnet mindestens einen Permanentmagneten auf. Durch den Permanentmagneten, welcher mit einem Elektromagneten kombiniert wird, reduziert sich der erforderliche Strom für den Elektromagneten.

Bei einer weiteren vorteilhaften Ausgestaltung weist die elektrische rotierende Maschine eine Regelungseinrichtung auf, welche mit dem ersten Elektromagneten verbunden ist und dafür vorgesehen ist, die Ankerscheibe berührungslos zu stabilisieren. Die Regelungseinrichtung regelt beispielsweise den Strom durch den Elektromagneten. Dies ist besonders vorteilhaft, da sich durch die Regelungseinrichtung die Zuverlässigkeit der magnetischen Lagerung erhöht.

Bei einer bevorzugten Ausführungsform weist die elektrische rotierende Maschine eine Sensorvorrichtung auf, welche dafür vorgesehen ist, die Position der Ankerscheibe im Bezug auf die Position des ersten Elektromagneten zu messen und ein Sensorsignal an die Regelungseinrichtung abzugeben. Durch die Bestimmung der Position der Ankerscheibe im Bezug auf die Position des ersten Elektromagneten lässt sich die Ankerscheibe präzise berührungslos stabilisieren.

Vorteilhaft weist die elektrische rotierende Maschine ein zusätzliches Radiallager auf, welches dafür vorgesehen ist, Kräfte, welche in die radiale Richtung wirken, aufzunehmen. Dies ist vorteilhaft, da so eine hohe Effizienz der elektrischen rotierenden Maschine erreicht wird.

In besonders vorteilhafter Weise ist das Radiallager als Kugellager oder Rollenlager ausgebildet. Da bei einer vertikalen elektrischen rotierenden Maschine die Kräfte in die radiale Richtung geringer sind, sind die Druckdifferenzen zwischen Lager und Lagerumgebung geringer, wodurch sich weniger Dichtigkeitsprobleme und damit verbundene Verunreinigungen ergeben. Daher ist es möglich die Radiallager als Kugellager oder Rollenlager auszubilden. Dies ist vorteilhaft, da so die Kosten für die elektrische rotierende Maschine gesenkt werden.

Bei einer weiteren vorteilhaften Ausgestaltung ist das Radiallager als ein aktives Magnetlager ausgebildet. Dies ist besonders vorteilhaft, da durch das axiale Magnetlager bereits die erforderliche Infrastruktur vorhanden ist und sich die Kosten im Vergleich zu einem alleinstehenden radialen aktiven Magnetlager verringern.

Im Folgenden wird die Erfindung anhand der in den Figuren dargestellten Ausführungsbeispiele näher beschrieben und erläutert. Es zeigen:
- FIG 1: einen Längsschnitt einer vertikalen elektrischen rotierenden Maschine mit einem aktiven Magnetlager an der Nichtantriebsseite,
- FIG 2: einen Längsschnitt einer vertikalen elektrischen rotierenden Maschine mit einem aktiven Magnetlager an der Antriebsseite,
- FIG 3: einen Längsschnitt eines einseitigen axialen aktiven Magnetlagers,
- FIG 4: einen Längsschnitt eines zweiseitigen axialen aktiven Magnetlagers und
- FIG 5: ein Blockschaltbild einer Motor-Pumpen-Anordnung.

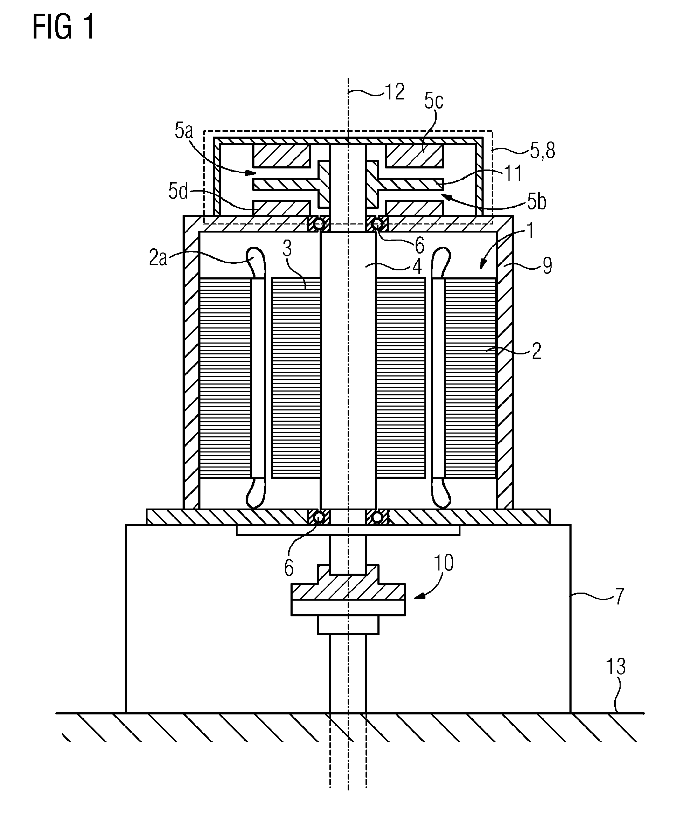

FIG 1 zeigt einen Längsschnitt einer vertikalen elektrischen rotierenden Maschine 1 mit einem aktiven Magnetlager 5 an der Nichtantriebsseite. Die vertikale elektrische rotierende Maschine 1 weist einen Rotor 3 mit einer Welle 4 auf. Eine vertikale Rotationsachse 12 definiert eine axiale Richtung, eine radiale Richtung und eine Umfangsrichtung. Den um die vertikale Rotationsachse 12 rotierenden Rotor 3 umgibt ein Stator 2 dessen Wicklungen an dessen axialen Enden Statorwickelköpfe bilden. Der Stator 2 ist mit dem Gehäuse 9 der elektrischen rotierenden Maschine 1 verbunden. Über Radiallager 6 ist der Rotor 3 mit dem Gehäuse 9 der elektrischen rotierenden Maschine 1 verbunden und gelagert. Unterhalb der axialen Enden des Rotors 3, auf der Antriebsseite der elektrischen rotierenden Maschine 1, befindet sich ein Rotorpodest 7, welches sich auf einem Fundament 13 befindet. In dem Rotorpodest 7 befindet sich eine Anbindung 10 der Welle 4 der elektrischen rotierenden Maschine 1 an beispielsweise eine große Wasserpumpe, welche in FIG 1 nicht eingezeichnet ist. Diese Anbindung erfolgt bevorzugt mit einem Flansch, welcher auch Wellenflansch genannt wird. Diese Konstruktion ist beispielhaft, Pumpenseitig können Variationen auftreten.

Oberhalb der axialen Enden des Rotors 3, auf der Nichtantriebsseite der elektrischen rotierenden Maschine 1, befindet sich ein Axiallager 8, welches als aktives Magnetlager 5 ausgeführt ist. Das als aktives Magnetlager 5 ausgeführte Axiallager 8 weist einen ersten Elektromagneten 5c und einen zweiten Elektromagneten 5d auf. An der Welle 4 ist eine Ankerscheibe 11 befestigt, welche mit dem ersten Elektromagneten 5c einen ersten Luftspalt 5a ausbildet und mit dem zweiten Elektromagneten 5d einen zweiten Luftspalt 5b ausbildet. Die Elektromagnete 5c, 5d weisen bevorzugt stromdurchflossene Spulen auf, die das vom Spulenstrom abhängige Magnetfeld erzeugen. Durch die Magnetfelder der Elektromagneten 5c, 5d sind die Ankerscheibe 11 und damit auch die mit der Ankerscheibe 11 verbundene Welle 4 berührungslos gelagert.

Die Elektromagnete 5c, 5d können einen Permanentmagneten aufweisen, welcher für eine Grundmagnetisierung oder Vormagnetisierung sorgt. Entsprechend reduziert sich der erforderliche Strom für die Elektromagneten 5c, 5d durch die Kombination der Elektromagneten 5c, 5d mit Permanentmagneten. Weiterhin ist die Dynamik der Regelung durch die Vormagnetisierung geringer.

Das Axiallager 8, welches als aktives Magnetlager 5 ausgeführt ist, nimmt die Kräfte, welche in axiale Richtung wirken, auf. In axiale Richtung wirkende Kräfte sind sowohl die axialen Kräfte der Pumpe im Betrieb als auch das Gewicht der Pumpe und elektrischen rotierenden Maschine 1. Durch das als aktives Magnetlager 5 ausgeführte Axiallager 8 können axiale Kräfte in beide Richtungen aufgenommen werden. Weiterhin können hochdynamische Kräfte aufgenommen werden. Ferner kann eine aktive Dämpfung in axialer Richtung eingebracht werden. Aufgrund der Fett- und Ölfreiheit des aktiven Magnetlagers 5 wird das Problem der Dichtigkeit und der Verschmutzung des Fördermediums der Pumpe, beispielsweise Wasser, komplett gelöst. Weiterhin vereinfacht sich der Service am Lager.

Die Radiallager 6 sind als Kugellager oder Rollenlager ausgebildet. Da bei der vertikalen elektrischen rotierenden Maschine 1 die Kräfte in die radiale Richtung geringer sind, sind die Druckdifferenzen zwischen Lager und Lagerumgebung geringer, wodurch sich weniger Dichtigkeitsprobleme und damit verbundene Verunreinigungen ergeben. Daher ist es möglich die Radiallager 6 als Kugellager oder Rollenlager auszubilden. Weiterhin ist es möglich die Radiallager 6 als aktive Magnetlager 5 auszuführen. Dies ist besonders vorteilhaft, da durch das axiale aktive Magnetlager 5,8 bereits die erforderlichen Komponenten, beispielsweise Reglung und Stromerzeugung, vorhanden sind, um ein Magnetlager betreiben zu können, und sich die Kosten im Vergleich zu einem alleinstehenden radialen aktiven Magnetlager verringern. Entsprechend entstehen auch von den Radiallagern 6 keine Verunreinigungen im Fördermedium durch eine Fett- oder Ölschmierung, wenn die Radiallagern 6 ebenfalls als aktive Magnetlager 5 ausgeführt sind.

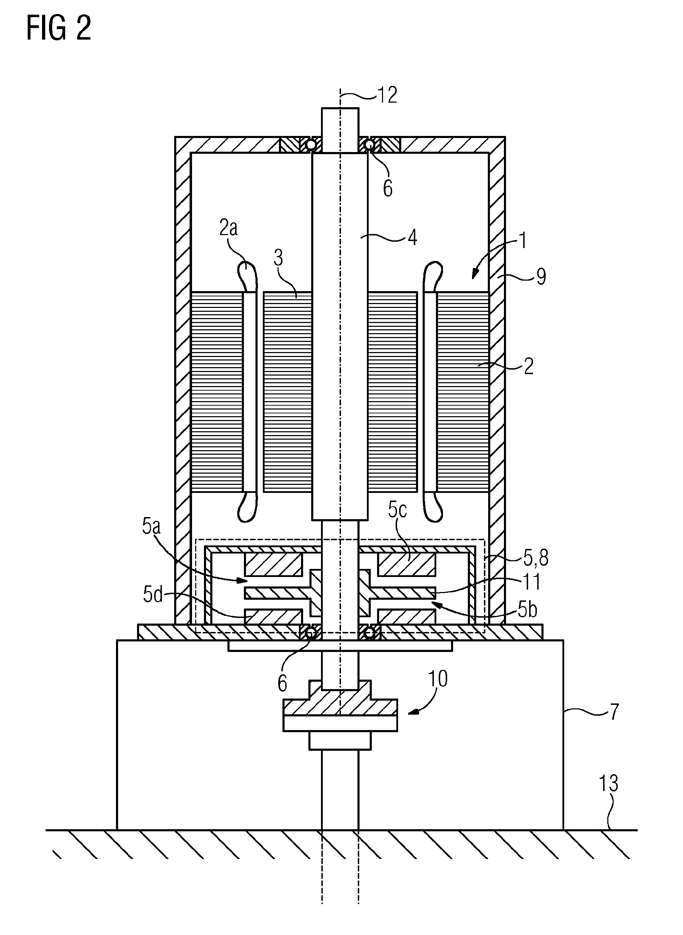

FIG 2 zeigt einen Längsschnitt einer vertikalen elektrischen rotierenden Maschine 1 mit einem aktiven Magnetlager 5 an der Antriebsseite. Der weitere Aufbau entspricht dem aus FIG 2.

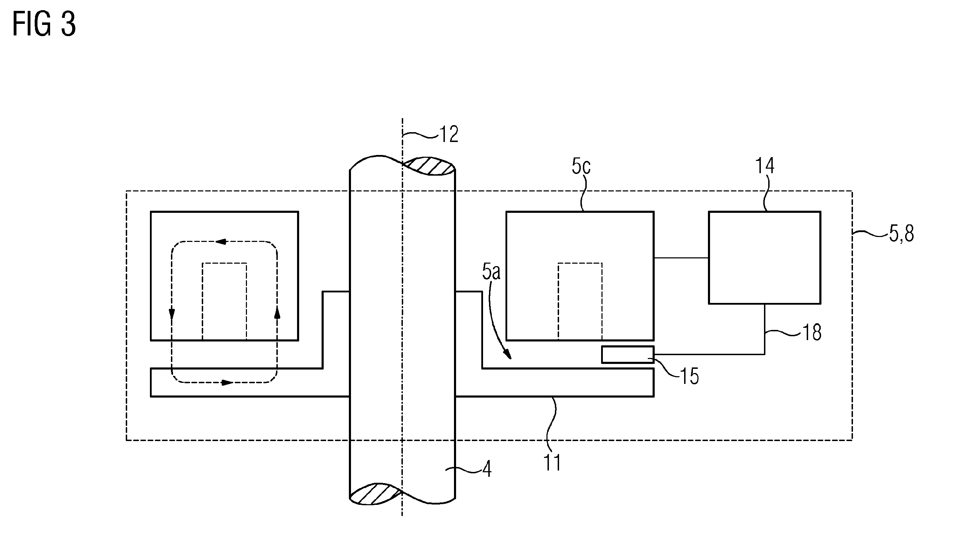

FIG 3 zeigt einen Längsschnitt eines einseitigen axialen aktiven Magnetlagers 5, 8. Die sich um die vertikale Rotationsachse 12 drehende Welle 4 weist eine quer zur vertikalen Rotationsachse 12 verlaufende Ankerscheibe 11 auf. Das als einseitiges aktives Magnetlager 5 ausgebildete Axiallager 8 weist einen ersten Elektromagneten 5c auf. Der erste Elektromagnet 5c weist bevorzugt eine stromdurchflossene Spule auf, die das vom Strom durch die Spule abhängige Magnetfeld erzeugt. Der erste Elektromagnet 5c bildet mit der Ankerscheibe 11 einen ersten Luftspalt 5a aus, sodass erste Elektromagnet 5c mit der Ankerscheibe 11 über den ersten Luftspalt 5a einen magnetischen Kreis ausbildet. Die Ankerscheibe 11 ist somit durch die Magnetkraft des Elektromagneten 5c berührungslos gelagert.

Eine Regelungseinrichtung 14 ist mit dem ersten Elektromagneten 5c derartig verbunden, dass die Regelungseinrichtung 14 das Magnetfeld regelt, um die Ankerscheibe 11 berührungslos zu stabilisieren. Ein stabiler Zustand ergibt sich, wenn die vom ersten Elektromagneten 5c erzeugte Magnetkraft den axialen Kräften der Pumpe im Betrieb und den Kräften, die sich aus dem Gewicht der Pumpe und des Motors ergeben, entspricht. Eine Sensorvorrichtung 15 misst die Position und/oder die axiale Bewegung der Ankerscheibe 11 oder einer speziellen Sensorscheibe und gibt ein Sensorsignal 18 an die Regelungseinrichtung 14 ab. Durch die Bestimmung der Position der Ankerscheibe 11 im Bezug auf eine definierte axiale Nulllage des Rotors lässt sich die Ankerscheibe 11 und damit der Rotor durch die Regelungseinrichtung 14 präzise berührungslos stabilisieren.

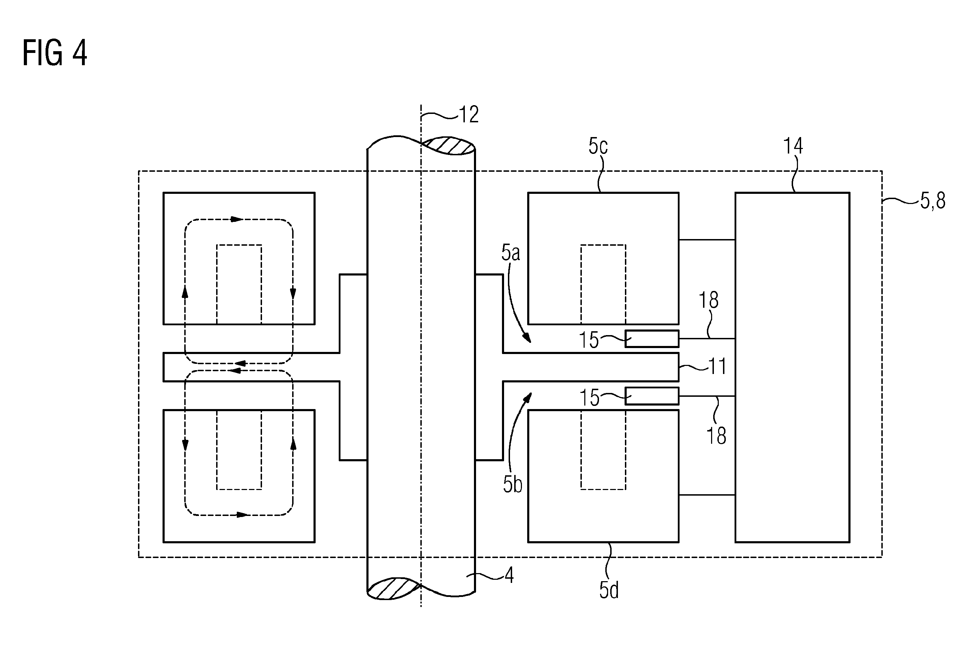

FIG 4 zeigt einen Längsschnitt eines zweiseitigen axialen aktiven Magnetlagers 5,8. Die sich um die vertikale Rotationsachse 12 drehende Welle 4 weist eine quer zur vertikalen Rotationsachse 12 verlaufende Ankerscheibe 11 auf. Das als einseitiges aktives Magnetlager 5 ausgebildete Axiallager 8 weist einen ersten Elektromagneten 5c und einen zweiten Elektromagneten 5d auf. Die Elektromagneten 5c, 5d weisen bevorzugt stromdurchflossene Spulen auf, die das vom Strom durch die Spule abhängige Magnetfeld erzeugen. Der erste Elektromagnet 5c bildet mit der Ankerscheibe 11 einen ersten Luftspalt 5a aus, sodass erste Elektromagnet 5c mit der Ankerscheibe 11 über den ersten Luftspalt 5a einen magnetischen Kreis ausbildet. Der zweite Elektromagnet 5d bildet mit der Ankerscheibe 11 einen zweiten Luftspalt 5b aus, sodass zweite Elektromagnet 5d mit der Ankerscheibe 11 über den zweiten Luftspalt 5b einen weiteren gegenläufigen magnetischen Kreis ausbildet. Die Ankerscheibe 11 ist somit durch die Magnetkraft der Elektromagneten 5c, 5d berührungslos gelagert.

Eine Regelungseinrichtung 14 ist mit dem ersten Elektromagneten 5c und dem zweiten Elektromagneten 5d derartig verbunden, dass die Regelungseinrichtung 14 die von den Elektromagneten 5c, 5d erzeugten Magnetfelder regelt, um die Ankerscheibe 11 berührungslos zwischen den Elektromagneten 5c, 5d zu stabilisieren. Eine Sensorvorrichtung 15, welche sich beispielsweise in einem Luftspalt 5a, 5b zwischen einem Elektromagneten 5c, 5d und einer Ankerscheibe 11 befindet, ermittelt die Position der Ankerscheibe 11 im Bezug auf die Position der Elektromagneten 5c, 5d und gibt ein Sensorsignal 18 an die Regelungseinrichtung 14 ab. Weitere Sensorvorrichtungen 15 können redundant angebracht werden und können eine höhere Genauigkeit erzeugen. Durch die Bestimmung der Position der Ankerscheibe 11 im Bezug auf die Position des ersten Elektromagneten 5a lässt sich die Ankerscheibe 11 durch die Regelungseinrichtung 14 präzise berührungslos zwischen den Elektromagneten 5c, 5d stabilisieren.

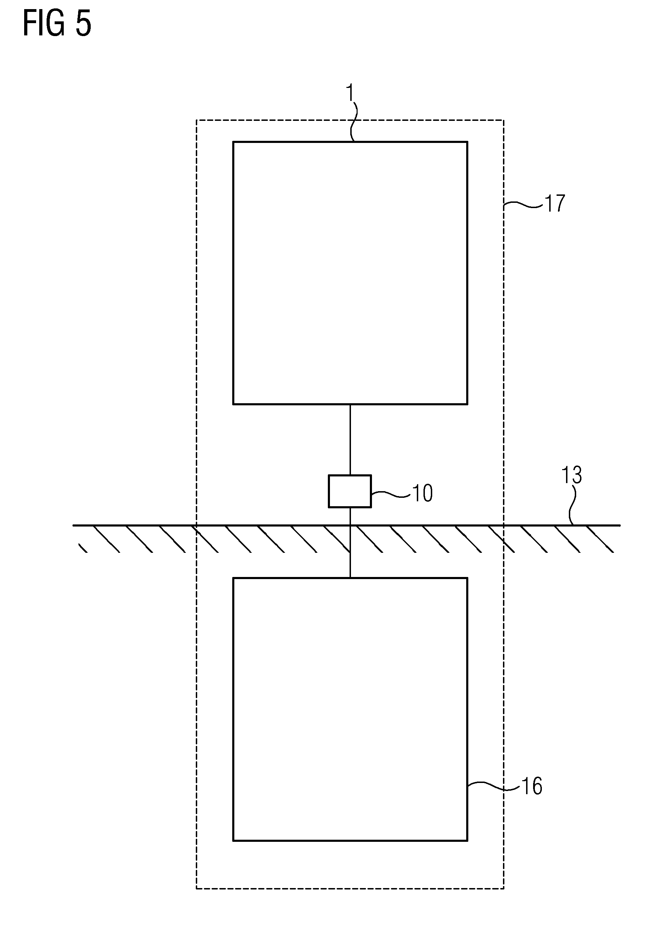

FIG 5 zeigt ein Blockschaltbild einer Motor-Pumpen-Anordnung 17. Diese Motor-Pumpen-Anordnung 17 weist eine elektrische rotierende Maschine 1 auf, wie sie in FIG 1 oder FIG 2 gezeigt ist. Die elektrische rotierende Maschine 1 ist über eine Anbindung 10, beispielsweise einen Flansch, mit einer Pumpe 16 verbunden, die sich unterhalb eines Fundaments 13, beispielsweise unter der Erde, befindet. Eine derartige Motor-Pumpen-Anordnung 17 weist eine Motorleistung von mehr als fünf Megawatt auf und wird beispielsweise als Kühlmittelpumpe in Kernkraftwerken oder als Meerwasserpumpe, beispielsweise in Meerwasserentsalzungsanlagen, eingesetzt.

Zusammenfassend betrifft die Erfindung eine elektrische rotierende Maschine 1, insbesondere zum Antreiben einer großen Wasserpumpe, aufweisend eine Welle 4, welche dafür vorgesehen ist, eine vertikale Rotationsachse 12 zu umlaufen, und mindestens ein Axiallager 8. Um eine einfache Gesamtkonstruktion zu gewährleisten und auf einfach Weise sicherzustellen, dass ein Fördermedium und/oder die Umgebung nicht durch austretendes Schmierfett oder -öl verschmutzt werden, wird vorgeschlagen, das Axiallager 8 als ein aktives Magnetlager 5 auszuführen, wobei das als ein aktives Magnetlager 5 ausgebildete Axiallager 8 dafür vorgesehen ist, Kräfte, welche in die axiale Richtung wirken, aufzunehmen.

## Patentansprüche

1. Elektrische rotierende Maschine (1), insbesondere zum Antreiben einer großen Wasserpumpe, aufweisend eine Welle (4), welche dafür vorgesehen ist, eine vertikale Rotationsachse (12) zu umlaufen, und mindestens ein Axiallager (8), wobei das Axiallager (8) als ein aktives Magnetlager (5) ausgebildet ist und dafür vorgesehen ist, Kräfte, welche in die axiale Richtung wirken, aufzunehmen.

2. Elektrische rotierende Maschine (1) nach Anspruch 1, wobei das als aktives Magnetlager (5) ausgebildete Axiallager (8) oberhalb oder unterhalb der axialen Enden der elektrischen rotierenden Maschine (1) angeordnet ist.

3. Elektrische rotierende Maschine (1) nach einem der Ansprüche 1 oder 2, wobei die Welle (4) eine quer zur vertikalen Rotationsachse (12) verlaufende Ankerscheibe (11) aufweist, wobei das als aktives Magnetlager (5) ausgebildete Axiallager (8) mindestens einen ersten Elektromagneten (5c) aufweist, welcher mit der Ankerscheibe (11) einen ersten Luftspalt (5a) ausbildet, sodass die Ankerscheibe durch die Magnetkraft des Elektromagneten (5c) berührungslos gelagert ist.

4. Elektrische rotierende Maschine (1) nach Anspruch 3, wobei der Elektromagnet (5c) mindestens einen Permanentmagneten aufweist.

5. Elektrische rotierende Maschine (1) nach einem der Ansprüche 3 oder 4, aufweisend eine Regelungseinrichtung (14), welche mit dem ersten Elektromagneten (5c) verbunden ist und dafür vorgesehen ist, die Ankerscheibe (11) berührungslos zu stabilisieren.

6. Elektrische rotierende Maschine (1) nach Anspruch 5, aufweisend eine Sensorvorrichtung (15), welche dafür vorgesehen ist, die Position der Ankerscheibe (11) im Bezug auf die Position des ersten Elektromagneten (5c) zu messen und ein Sensorsignal (18) an die Regelungseinrichtung (14) abzugeben.

7. Elektrische rotierende Maschine (1) nach einem der Ansprüche 1 bis 6, aufweisend ein zusätzliches Radiallager (6), welches dafür vorgesehen ist, Kräfte, welche in die radiale Richtung wirken, aufzunehmen.

8. Elektrische rotierende Maschine (1) nach Anspruch 7, wobei das Radiallager (6) als Kugellager oder Rollenlager ausgebildet ist.

9. Elektrische rotierende Maschine (1) nach Anspruch 7, wobei das Radiallager (6) als ein aktives Magnetlager (5) ausgebildet ist.

10. Motor-Pumpen-Anordnung (17) aufweisend eine Pumpe (16) und eine elektrische rotierende Maschine (1) nach einem der Ansprüche 1 bis 9.
